# FASCICULE DE BREVET EUROPEEN

(11) **EP 3 990 371 B1**
(45) Date de publication et mention de la délivrance du brevet: **28.08.2024**
(21) Numéro de dépôt: 20734222.1
(22) Date de dépôt: 26.06.2020
(51) Int. Cl.: B65G 1/10, B65G 1/04, B65G 1/12

(54) **SYSTÈME DE DÉPLACEMENT MODULAIRE TRIDIMENSIONNEL D'ÉLÉMENTS STANDARD AU SEIN D'UNE STRUCTURE TRIDIMENSIONNELLE DE TYPE MAILLAGE**
DREIDIMENSIONALES MODULARES SYSTEM ZUM BEWEGEN VON STANDARDELEMENTEN INNERHALB EINER DREIDIMENSIONALEN GITTERSTRUKTUR
THREE-DIMENSIONAL, MODULAR SYSTEM FOR MOVING STANDARD ELEMENTS WITHIN A THREE-DIMENSIONAL STRUCTURE OF THE GRID TYPE

(30) Priorité: 27.06.2019 FR 1907047
(43) Date de publication de la demande: 04.05.2022
(73) Titulaire: Galam Robotics, 75016 Paris (FR)
(72) Inventeur: PEREZ, Samuel, 75006 PARIS (FR); LEVY, Jonathan, 75019 PARIS (FR)
(74) Mandataire: Regimbeau
(86) Numéro de dépôt international: PCT/EP2020/068108
(87) Numéro de publication internationale: WO 2020/260639

(56) Documents cités:
- JP-A- 2016 160 040
- US-A- 2 712 875
- US-A- 2 837 224
- US-A1- 2008 211 358
- US-A1- 2019 062 058
- US-B1- 9 796 527

## Description

### DOMAINE DE L'INVENTION

La présente invention concerne le domaine des solutions de stockage automatisé. Avec l'essor des besoins industriels, de la logistique fine et du e-Commerce, le développement et l'utilisation de solutions de stockage et de collecte de marchandises automatisées se révèlent déterminants pour de nombreux acteurs.

### ETAT DE LA TECHNIQUE

Différents types de solutions ont été proposées selon la typologie de besoins qu'elles adressent. Le document US2019062058 A1 divulgue un système selon le préambule de la revendication 1, un procédé de déplacement d'un casier cible entre un module initial et un module final pour un système modulaire de déplacement d'éléments de stockage ainsi qu'un produit programme d'ordinateur comportant des données de code configurées pour, lorsqu'elles sont mises en oeuvre par une unité de calcul, mettre en oeuvre un procédé de déplacement d'un casier dans un système modulaire de déplacement d'éléments de stockage.

Les technologies de type « Transtockeur » désignent une machine se déplaçant selon deux dimensions entre deux rayons de produits. Un transtockeur est composé d'un plateau mobile (couramment appelé 'bras') qui se déplace face au produit voulu, le récupère, et le ramène jusqu'à un opérateur externe ou une zone de récupération. Un transtockeur est une machine essentiellement bi-dimensionnelle, et peut fonctionner potentiellement à grande hauteur.

Les technologies de type « Carrousel » désignent un ascenseur rotatif et un système de contenants tous reliés à un système de translation de type courroie. La courroie entraîne les contenants en mouvement. Le principe est de ramener vers un point de sortie le contenant ayant le produit voulu. Ce type de technologie peut être orienté verticalement ou horizontalement. La technologie de type carrousel la plus usitée est appelée « stockeur rotatif vertical ».

Les technologies de type « Flottes robotiques » mettent en oeuvre une flotte de robots mobiles pouvant récupérer des contenants standards. Certaines solutions mettent en oeuvre des robots autonomes et mobiles se déplaçant au sol selon deux dimensions de manière à transporter des étagères dans lesquelles se trouvent des produits.

D'autres solutions mettent en oeuvre des robots autonomes et mobiles se déplaçant en deux dimensions au-dessus d'un maillage de stock, et qui récupèrent par des systèmes de pose/dépose des produits situées sous eux.

Les distributeurs automatiques, classiquement utilisés par le grand public notamment comme distributeurs à boissons ou nourriture, peuvent gérer des produits de faible poids et volume.

Ces technologies diffèrent par leur nature mais également par leurs performances, et ne sont donc pas adaptées aux mêmes usages.

Les transtockeurs présentent une faible compacité en raison des espaces vides nécessaires aux déplacements du plateau entre les rayons de produits. De plus, le débit de marchandises d'un tel système dépend de la position du produit voulu par rapport à la zone de récupération et des temps de déplacement incompressibles du plateau. Un seul produit pourra être récupéré par déplacement de plateau. En outre, de tels systèmes sont difficiles à mettre en oeuvre dans certaines configurations d'espaces de stockage.

Les technologies à carrousel présentent une forte compacité au détriment du flux de marchandises pouvant être distribuées en parallèle. Notamment, les pics de demande entraînent invariablement des files d'attente en raison du faible débit de distribution des marchandises. De plus, les dimensions des carrousels sont standardisées et occupent un volume défini, ne permettant pas de s'adapter à tous les espaces.

Les flottes de robots mobiles permettent une adaptabilité au débit de marchandises demandé, et sont adaptables à de nombreuses contraintes d'espaces tant que l'espace nécessaire à leur circulation est important. Les systèmes de stockage utilisant de telles technologie montreront donc une compacité limitée en raison de l'espace nécessaire à la circulation des robots.

Les distributeurs automatiques sont très compacts et offrent de ce fait une bonne adaptabilité aux espaces de stockage restreints, au détriment du débit de distribution de marchandises qui est limité et entraîne donc des files d'attente en cas de pics de demande.

Des méthodes de stockage non automatisées sont classiquement rencontrées dans des environnements présentant de fortes contraintes d'encombrement et nécessitant une compacité de stockage importante. Par exemple, l'archivage dynamique, dans lequel des étagères sont montées sur des châssis mobiles sur rails, permet de maximiser la capacité de stockage en fonction de l'entrepôt. Cependant, une telle technologie présente un débit très limité, car l'utilisateur est obligé de déplacer les étagères pour aller récupérer chaque produit dont il a besoin, ce qui limite l'accessibilité et le flux de distribution de marchandises du système.

Il existe donc un besoin technique d'une solution de stockage compacte, adaptable à tout type d'espace, notamment restreints, et présentant un fort débit de distribution tout en limitant le besoin d'intervention manuelle et facilitant ainsi son utilisation.

### EXPOSE DE L'INVENTION

Un but général de l'invention est de proposer une solution de stockage compacte, adaptable à tout type d'environnement de stockage et présentant un fort débit de distribution.

Un autre but est de faciliter l'installation et la maintenance d'un système de stockage automatisé.

L'invention propose un système modulaire de déplacement d'éléments de stockage comportant une pluralité de modules adjacents et au moins un casier apte à être déplacé dans la structure modulaire d'un module à un module adjacent, un module comportant un châssis de forme parallélépipédique rectangle comportant des barres assemblées entre elles, au moins un parmi les modules et casiers comportant au moins un actionneur et l'autre parmi les modules et casiers comportant des empreintes complémentaires, un parmi les actionneurs et les empreintes étant fixé aux barres du châssis, l'autre parmi les actionneurs et les empreintes étant fixé au casier, les actionneurs et empreintes étant configurés pour coopérer de manière à entraîner en translation un casier situé au moins partiellement dans un module vers un module adjacent, le système comportant en outre un contrôleur central, configuré pour piloter les actionneurs et gérer le déplacement du casier dans le système.

L'invention peut avantageusement être complétée par les caractéristiques suivantes, prises seules ou en combinaison :
- un actionneur comporte un élément d'entraînement configuré pour être en prise avec les empreintes, et un dispositif d'embrayage configuré pour escamoter l'élément d'entraînement dans une position débrayée dans laquelle l'élément d'entraînement est à distance des empreintes de sorte que l'élément d'entraînement n'interagit pas avec les empreintes ; cela permet alternativement de déplacer le casier ou de libérer le casier de manière à permettre sa circulation entre les modules ; cela permet notamment de permettre un déplacement du casier dans les trois directions au sein d'un même module ;
- au moins un des actionneurs d'un module est apte à entraîner le casier dans les deux sens d'une même direction de translation ; cela permet de limiter le nombre d'actionneurs ;
- les actionneurs d'un module sont aptes à entraîner le casier en translation selon 3 dimensions ;
- l'élément d'entraînement est déployé en position embrayée pour venir en prise avec une surface d'entraînement ou des empreintes situées sur les arêtes ou les chanfreins du casier ;
- lors de son escamotage, l'élément d'entraînement se déplace dans un plan incliné par rapport aux faces du module, l'inclinaison étant comprise entre 30° et 60° ; cela permet de libérer le passage d'un casier dans deux directions ;
- l'actionneur comporte un actionneur vertical comportant une vis sans fin montée à rotation sur le châssis, un écrou coopérant avec la vis, l'écrou comportant une saillie configurée pour coopérer avec une empreinte verticale réalisée le long d'une arête verticale du casier, de manière à entraîner le casier en translation verticale lorsque la saillie coopère avec l'empreinte verticale et que la vis est entraînée en rotation ; cela permet d'obtenir une robustesse importante du système, ainsi qu'une position statique facile à mettre en oeuvre ;
- l'actionneur comporte un actionneur horizontal comportant au moins un translateur horizontal comportant :
   ∘ un élément d'entrainement configuré pour coopérer avec une empreinte horizontale réalisée sur le casier de manière à entrainer le casier en translation ;
   ∘ un actionneur d'entraînement configuré pour entraîner en rotation l'élément d'entraînement ;
   ∘ un dispositif d'embrayage configuré pour, sélectivement, mettre en prise l'élément d'entraînement et le casier ou dégager l'élément d'entraînement du casier ;
- le dispositif d'embrayage comporte un bras mobile monté à rotation sur un châssis de translateur monté fixe sur le châssis, l'élément d'entrainement étant monté à rotation à une extrémité du bras mobile, et un actionneur d'embrayage configuré pour entraîner en rotation le bras mobile, l'élément d'entraînement et l'actionneur d'entraînement étant également montés sur le bras mobile ; cela permet d'améliorer la compacité de l'actionneur ;
- le translateur horizontal comporte en outre un arbre d'entrée monté à rotation dans le châssis de translateur, et un ensemble de distribution entraîné par l'arbre d'entrée, l'ensemble de distribution étant configuré pour entraîner en rotation à la fois l'actionneur d'embrayage et l'actionneur d'entraînement ; cela permet de limiter le nombre de moteurs de l'actionneur, et incidemment son encombrement, son poids et son coût ;
- le dispositif d'embrayage comporte un actionneur d'embrayage comportant :
   ∘ une came montée à rotation sur le bras mobile ;
   ∘ un ensemble de friction configuré pour transmettre un couple limité de l'ensemble de distribution à la came et ainsi assurer l'entraînement en rotation de la came
   ∘ un galet de came monté à rotation sur le châssis configuré pour coopérer avec la came ;
- l'ensemble de friction comporte :
   ▪ une rondelle de friction intercalée entre la came et l'ensemble de distribution ;
   ▪ un ressort de compression comprimé entre le bras mobile et la came et configuré pour fournir un effort de friction de manière à assure l'entraînement par friction de la came par l'ensemble de distribution par l'intermédiaire de la rondelle de friction ;
- l'ensemble de friction comporte une bague fendue solidaire de la came, l'ensemble came et bague fendue étant monté à rotation sur l'axe support, l'axe support étant entraîné en rotation par la quatrième poulie ou le deuxième pignon, la bague fendue assurant un effort de friction sur l'axe support permettant d'entrainer l'ensemble came et bague fendue en rotation ;
- l'actionneur horizontal comporte plusieurs translateurs horizontaux, un arbre de transmission et un moteur électrique configuré pour entraîner l'arbre de transmission, l'arbre de transmission étant configuré pour entraîner simultanément les translateurs horizontaux ; cela permet de diminuer le nombre de moteurs de l'actionneur, et donc son coût et son encombrement ;
- l'ensemble de distribution comprend :
   ∘ une première poulie montée sur un premier arbre intermédiaire, le premier arbre intermédiaire étant monté à rotation sur le châssis de translateur selon un axe perpendiculaire à l'axe de l'arbre d'entrée, et étant entrainé en rotation par l'arbre d'entrée au moyen d'un premier pignon conique et d'un deuxième pignon conique montés respectivement sur l'arbre d'entrée et le premier arbre intermédiaire ;
   ∘ une deuxième poulie montée à rotation sur un axe monté sur le bras mobile, la deuxième poulie étant configurée pour entraîner l'élément d'entraînement ;
   ∘ une première courroie coopérant avec la première poulie et la deuxième poulie ;
   ∘ une troisième poulie montée à rotation sur l'axe, la troisième poulie étant solidaire en rotation avec la deuxième poulie ;
   ∘ une quatrième poulie montée à rotation sur un axe support monté sur le bras mobile, la quatrième poulie étant configurée pour entraîner l'actionneur d'embrayage ;
   ∘ une deuxième courroie coopérant avec la troisième poulie et la quatrième poulie.

Selon un autre aspect, l'invention propose un procédé de déplacement d'un casier cible entre un module initial et un module final dans un système modulaire de déplacement d'éléments de stockage selon l'invention, comprenant les étapes de :
- S10 : Détermination d'un chemin entre le module initial et le module final, le chemin comportant N modules,
- S20 : Déplacements des casiers situés sur le chemin précédemment déterminé de manière à libérer le chemin,
- S30 : Déplacement du casier cible vers le module final en passant par les modules du chemin.

Dans un tel procédé, l'étape S30 est avantageusement effectuée à chaque fois que le module du chemin adjacent au casier cible est libéré.

Selon un autre aspect, l'invention propose un produit programme d'ordinateur comportant des données de code configurées pour, lorsqu'elles sont mises en oeuvre par une unité de calcul, mettre en oeuvre un procédé de déplacement d'un casier selon l'invention dans un système modulaire de déplacement d'éléments de stockage selon l'invention.

### DESCRIPTION DES FIGURES

Les caractéristiques propres de l'invention apparaitront clairement à la lecture d'une description d'un mode de réalisation de l'invention, donné à titre de simple exemple illustratif et non limitatif, et des dessins annexés parmi lesquels :
La figure 1 est une vue en perspective d'un mode de réalisation d'un système modulaire de déplacement d'éléments de stockage selon l'invention ;
Les figures 2a, 2b et 2c sont des vues d'exemples de configuration d'un système modulaire de déplacement d'éléments de stockage selon l'invention ;
La figure 3 est un schéma d'un mode de réalisation d'un réseau électronique et informatique d'un système modulaire de déplacement d'éléments de stockage selon l'invention ;
La figure 4 est une vue d'un mode de réalisation d'un module selon l'invention ;
La figure 5 est une vue d'un mode de réalisation d'un casier selon l'invention ;
La figure 6 est une vue de face et en perspective d'un mode de réalisation d'un actionneur vertical d'un module selon l'invention ;
Les figures 7a et 7b sont des vues en perspective d'un mode de réalisation d'une empreinte verticale d'un casier selon l'invention ;
La figure 8 est une vue en perspective d'un mode de réalisation d'un translateur horizontal d'un module selon l'invention ;
La figure 9 est une vue en perspective d'un deuxième mode de réalisation d'un translateur horizontal d'un module selon l'invention ;
Les figures 10a, 10b et 10c sont des vues en perspective d'un mode de réalisation d'un actionneur d'embrayage d'un translateur horizontal d'un module selon l'invention ; plus particulièrement, les figures 10a, 10b et 10c illustrent en détail l'entraînement de la came au moyen d'un dispositif de friction ; las figures 10a et 10b illustrent un premier mode de réalisation de dispositif de friction ; la figure 10c illustre un deuxième mode de réalisation de dispositif de friction ;
La figure 11 est une vue d'un mode de réalisation de la positon débrayée et embrayée d'un actionneur d'embrayage d'un translateur horizontal d'un module selon l'invention ;
La figure 12 est une vue d'un mode de réalisation d'un actionneur horizontal selon l'invention ;
Les figures 13a, 13b, 13c, 13d et 13e sont des vues d'un exemple de procédé de déplacement pour réaliser un mouvement de translation vertical ascendant ;
Les figures 14a, 14b, 14c, 14d, 14e, 14f, 14g et 14h sont des vues d'un exemple de procédé de déplacement pour réaliser un mouvement de translation vertical descendant ;
La figure 15 illustre le schéma de principe d'un chemin de déplacement d'un casier dans le système selon l'invention ;
La figure 16 illustre plus en détail un virage d'un chemin de déplacement selon l'invention ;
La figure 17 illustre le logigramme du processus P1 de déplacement d'un casier (d'un module A à un module B) ;
La figure 18 illustre le logigramme du processus P2 de déplacement élémentaire d'un casier (d'un module A à un de ses modules adjacents C) ;
La figure 19 illustre le logigramme du processus P3 de propagation des commandes.

### DESCRIPTION DETAILLEE DE L'INVENTION

### Généralités

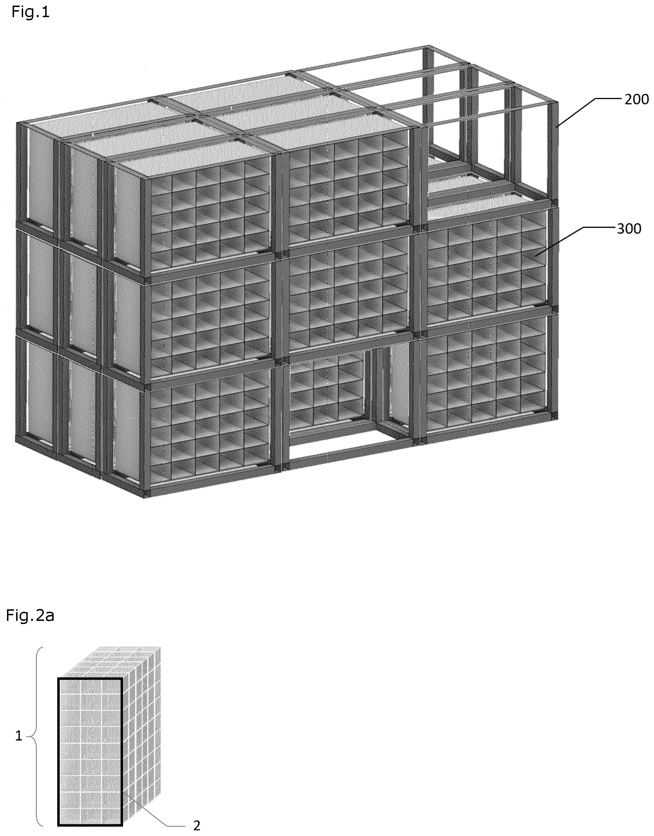

En référence à la figure 1, un système modulaire 1 de déplacement d'éléments de stockage comporte une pluralité de modules 200 adjacents, et une pluralité de casiers 300 aptes à être déplacés d'un module 200 à un module 200 adjacent.

La structure du système 1 est modulaire du fait qu'elle comporte une pluralité de modules 200 qui sont positionnés puis fixés entre eux lors de l'installation de la structure de manière à s'adapter à toute contrainte d'encombrement.

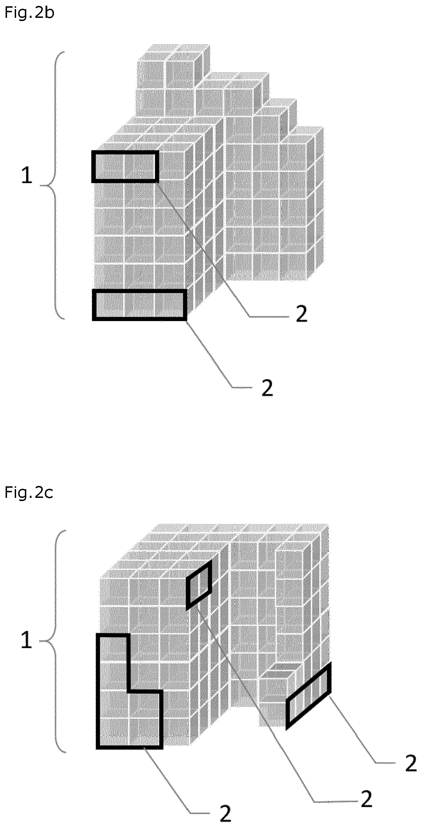

Cela permet également de faciliter toute intervention ultérieure ayant pour but l'évolution de la structure. Ainsi, une multitude de configurations sont possibles comme illustrées en figures 2a, 2b et 2c.

En figure 2a, les modules 200 forment une structure parallélépipédique classique. En fonction des contraintes d'installation du système 1, chaque module 200 présentant une face accessible représente une interface potentiellement accessible par un utilisateur.

Il est entendu par face accessible une face d'un module qui n'est en regard d'aucune face d'un module adjacent audit module.

Ainsi, dans le mode de réalisation illustré en figure 2a, le système présente une zone d'interface 2. En pratique, tous les modules 200 d'une même face du système 1 peuvent être accessibles à un utilisateur.

Dans un deuxième exemple illustré en figure 2b, le système 1 présente une forme adaptée à des contraintes d'encombrement dues à la forme de l'espace de stockage. Il présente dans l'exemple illustré deux zones d'interface 2 qui peuvent par exemple se situer à deux étages différents d'un bâtiment.

Dans un troisième exemple illustré en figure 2c, le système 1 présente une forme adaptée aux contraintes d'architecture de l'espace de stockage, et présente trois zones d'interface 2 qui peuvent être situées à différents points d'accès, de chargement ou de déchargement du bâtiment.

La modularité du système 1 peut donc permettre de faciliter et de fluidifier les flux de marchandises entre le ou les points de livraison et le ou les points de retrait des marchandises.

Il suffit donc de juxtaposer et empiler les modules 200 en les connectant entre eux pour former la structure modulaire, qui est donc démontable ou modifiable par une méthode identique.

Avantageusement, les modules 200 présentent tous une forme identique ; dans ce mode de réalisation, les modules sont parallélépipédiques rectangles. Cette architecture permet de faciliter les déplacements des casiers 300 dans le système 1 tout en maximisant l'espace de stockage disponible dans un casier 300.

Le système 1 de déplacement d'éléments de stockage comporte en outre une pluralité d'actionneurs 400 configurés pour entraîner les casiers 300, et une pluralité d'éléments de commande 500 configurés pour piloter les actionneurs 400 et gérer le déplacement du ou des casiers 300 présents dans le système 1.

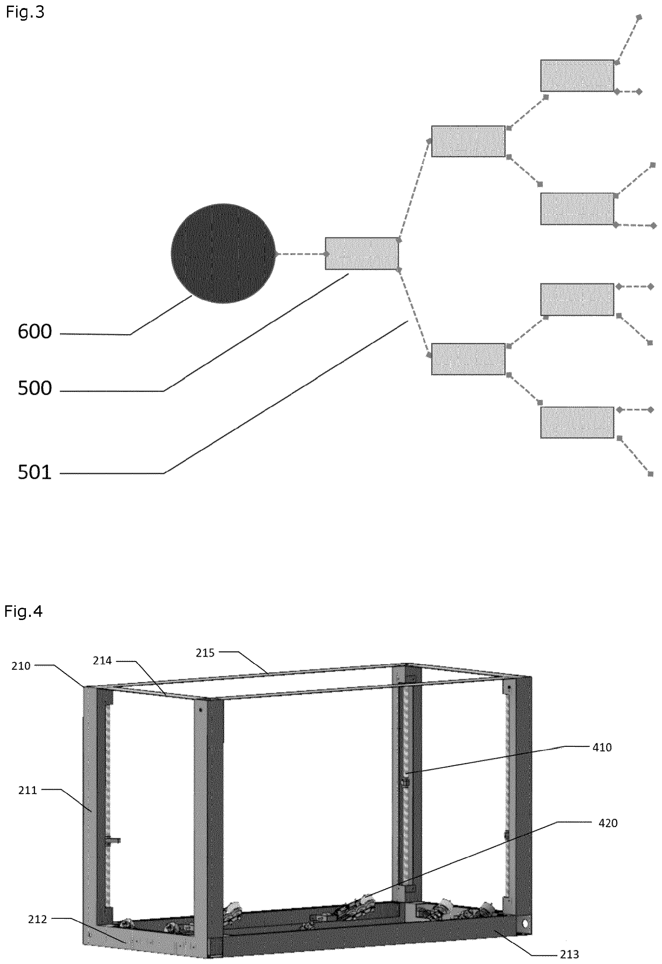

En référence à la figure 3, un contrôleur central 600 est configuré pour générer les ordres de commande de déplacement des différents casiers et ainsi mettre en oeuvre un procédé de déplacement automatique des casiers 300.

Le contrôleur central 600 comporte une unité de traitement ou de calcul, telle qu'un processeur, et une ou plusieurs mémoires comprenant des données de code générant des ordres de fonctionnement configurés pour mettre en oeuvre un procédé de déplacement d'un casier 300 dans le système 1 lorsqu'elles sont mises en oeuvre par une unité de traitement.

Un élément de commande 500 peut comporter une unité de traitement ou de calcul tel qu'un processeur, ainsi qu'un ou plusieurs préactionneurs aptes à distribuer l'énergie aux actionneurs 400 en fonction des commandes reçues du contrôleur central 600.

Le contrôleur central 600 et les éléments de commande 500 forment un réseau électronique et informatique, de manière à communiquer les commandes à chacun des modules 200 ou casiers 300 depuis le contrôleur central 600.

Avantageusement, les éléments de commande 500 sont solidaires des modules 200 qui peuvent être interconnectés entre eux dans leurs fonctionnements mécanique, électrique, électronique.

L'interconnexion mécanique des modules 200 permet de fixer un module 200 à ses modules 200 adjacents.

L'interconnexion électrique des modules 200 permet de propager la puissance électrique et ainsi alimenter les différents systèmes électromécaniques comme les actionneurs 400 et les éléments de commande 500. Cela permet d'alimenter l'intégralité du système au moyen d'un nombre limité de sources de puissance, et notamment de limiter la nécessité d'embarquer des moyens de stockage d'énergie, qui seraient lourds et encombrants.

Dans un mode de réalisation préférentiel chaque module 200 possède son propre élément de commande 500 qui est interconnecté aux éléments de commande 500 des modules 200 adjacents via une liaison électronique 501 filaire, formant un réseau global au sein du système 1 permettant d'échanger et transmettre les commandes à tout module 200 du système 1.

Cela permet de limiter les interférences électromagnétiques, et de limiter le câblage du système 1.

Les modules 200 sont avantageusement identiques dans leur fonction et dans leur structure, de manière à limiter le coût de revient du casier par effet d'échelle et de faciliter la maintenance du système 1, chaque casier 200 étant interchangeable.

### Le module 200

Dans le mode de réalisation représenté en figure 4, un module 200 comporte un châssis 210, et le châssis 210 comporte une pluralité de barres formant un parallélépipède rectangle.

Dans le mode de réalisation représenté, le châssis 210 comporte :
- Quatre montants 211 s'étendant selon une direction verticale, la direction verticale étant relative à la disposition du système dans des conditions normales d'utilisation,
- Deux premières barres 212 s'étendant parallèlement selon une direction longitudinale, chaque première barre 212 s'étendant d'un montant à un deuxième montant,
- Deux deuxièmes barres 213 s'étendant parallèlement selon une direction transversale, chaque deuxième barre 213 s'étendant d'un montant à un deuxième montant,
- Deux troisième barres 214 s'étendant parallèlement selon la direction longitudinale, chaque troisième barre 214 s'étendant d'un montant à un deuxième montant, les troisièmes barres 214 s'étendant parallèlement aux premières barres 212,
- Deux quatrièmes barres 215 s'étendant parallèlement selon la direction transversale, chaque quatrième barre 215 s'étendant d'un montant à un deuxième montant, les quatrièmes barres 215 s'étendant parallèlement aux deuxièmes barres 213.

Dans des conditions normales d'utilisation, le châssis 210 est disposé de telle manière que les premières barres 212 et deuxièmes barres 213 forment le plan inférieur du parallélépipède rectangle, et les troisièmes barres 214 et quatrièmes barres 215 forment le plan supérieur du parallélépipède rectangle.

Les termes inférieur et supérieur sont définis selon la direction verticale.

Dans le mode de réalisation représenté, un module 200 comporte également des actionneurs verticaux 410, des actionneurs horizontaux 420, un élément de commande 500, des connecteurs d'information, et des connecteurs de puissance, solidaires du châssis 210. Cela permet notamment d'éviter de positionner les actionneurs 400 sur les casiers 300 et ainsi de limiter le poids des casiers 300 et donc la consommation électrique du système 1. Cela permet en outre de faciliter l'alimentation des actionneurs 400 et de limiter l'utilisation de batteries et des contraintes liées aux batteries, notamment la recharge.

Les moteurs permettant la mise en mouvement des actionneurs verticaux 410 et horizontaux 420 sont connectés à l'élément de commande 500.

Les connecteurs d'information permettent aux éléments de commande 500 de deux modules adjacents de se transmettre des informations. Les connecteurs de puissance permettent de transmettre la puissance électrique de module 200 en module 200.

Dans un mode de réalisation, chacune des faces d'un module comporte un connecteur de puissance et un connecteur d'information à au moins un coin de la face. Deux faces antagonistes d'un même module 200 présentent des connecteurs de puissance et d'information situés en regard respectivement d'une face à l'autre. Cela permet de former une structure modulaire en connectant différents modules 200 adjacents au moins deux à deux, quelles que soient les faces adjacentes desdits modules, ce qui facilite le montage.

Avantageusement, les connecteurs de puissance et d'information des faces du module 200 qui sont censées être la face inférieure et la face supérieure sont situées de telle manière qu'elles ne peuvent pas être connectées aux connecteurs des faces latérales du module 200. Cela permet de former un détrompeur et d'assurer un montage des modules 200 selon une orientation correcte dans le système 1.

Un module 200 peut être équipé d'un dispositif de détection configuré pour détecter la présence ou l'absence d'un casier 300 au sein dudit module 200. Il peut comprendre par exemple un capteur optique, ou un détecteur de proximité inductif, ou tout capteur apte à détecter la présence d'un casier 300 dans le module 200.

Un module 200 peut être équipé d'un dispositif de détection configuré pour détecter la vitesse d'un casier 300 au sein dudit module 200. Il peut comprendre par exemple un capteur optique, ou un dispositif de mesure de vitesse par effet Doppler, ou tout capteur apte à détecter la vitesse d'un casier 300 dans le module 200.

Le contrôleur central 600 est apte à détecter la connexion, la position et l'orientation d'un nouveau module 200 dans le système 1, et est configuré pour modéliser virtuellement les modules 200 formant le système 1. Le contrôleur central 600 met ainsi à jour le modèle virtuel du système 1 au fur et à mesure de la connexion de nouveaux modules 200. Le contrôleur central 600 est ainsi apte à tout moment de connaître l'état du système 1, sa géométrie et la distribution des modules 200 pleins et vides dans le système.

### Le casier 300

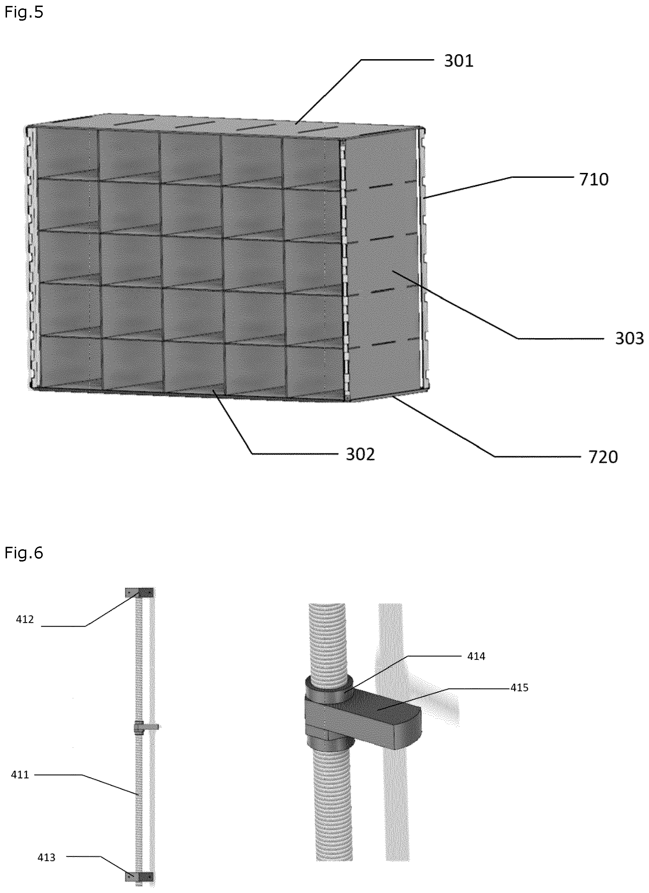

Dans le mode de réalisation représenté en figure 5, le casier 300 comporte une plaque supérieure 301, une plaque inférieure 302, et deux plaques latérales 303 parallèles s'étendant de la plaque inférieure 302 à la plaque supérieure 301, préférentiellement selon la direction verticale.

Les plaques 301, 302, 303 du casier 300 définissent ensemble une enceinte apte à recevoir un contenu (une marchandise). Dans le mode de réalisation représenté, l'enceinte présente deux faces latérales ouvertes, ce qui permet d'améliorer l'accessibilité pour un utilisateur.

Dans une variante non représentée, le casier 300 peut comporter une plaque latérale supplémentaire formant un fond, ou dans une autre variante des plaques latérales supplémentaires destinées à former une enceinte fermée, et optionnellement hermétique. Optionnellement, les casiers peuvent comporter un système de drainage, par exemple un robinet, permettant d'évacuer au moins partiellement le contenu du casier.

Dans un mode de réalisation, les parois peuvent présenter une structure d'isolation thermique, et/ou une structure d'isolation électrique et/ou magnétique, ou encore un blindage.

Dans un mode de réalisation, le casier 300 peut comporter une alimentation électrique et/ou des capteurs, par exemple de position, configuré pour communiquer avec un élément de commande 500 ou le contrôleur central 600.

Afin de permettre le déplacement du casier 300 d'un module 200 à un autre, les modules 200 et casiers 300 comportent des actionneurs 500 et des empreintes 700 complémentaires fixés les uns aux montants 211 et barres 212, 213, 214, 215 du châssis 210, les autres aux casiers 300.

Dans le mode de réalisation représenté, on distingue deux types d'empreintes :
- Les empreintes verticales 710, permettant le déplacement d'un casier 300 selon la direction verticale,
- Les empreintes horizontales 720, permettant le déplacement d'un casier 300 selon les directions longitudinales et transversales.

Optionnellement, les casiers 300 comportent un élément d'identification configuré pour être détecté par l'élément de commande 500 d'un module 200. De cette manière, la position de chaque casier 300 dans le système 1 est connue à tout moment. L'élément d'identification peut être optique, par exemple un code barre, qui est lu par un capteur optique fourni sur l'élément de commande 500 du module 200. Cela permet de limiter l'utilisation de matériel supplémentaire, et de limiter l'émission de signaux électromagnétiques.

Alternativement, le contrôleur central 600 garde en mémoire l'intégralité des mouvements effectués par chacun des casiers 300, qui est associé à un identifiant fixé arbitrairement par l'utilisateur au moment de l'initialisation du système 1, de manière à connaître la position de chacun des casiers 300 dans le système 1.

### L'actionneur 400

Les actionneurs 400 et empreintes 700 sont configurés pour coopérer de manière à entraîner en translation un casier 300 situé au moins partiellement dans un module 200 vers un module 200 adjacent.

Dans un mode de réalisation préférentiel, les actionneurs 400 comportent :
- Des actionneurs verticaux 410 configurés pour entraîner un déplacement vertical du casier 300,
- Des actionneurs horizontaux 420 configurés pour entraîner le casier 300 en déplacement selon les directions longitudinales et transversales.

### L'actionneur vertical 410

Dans le mode de réalisation représenté en figure 6, l'actionneur vertical 410 comporte une vis 411 sans fin, montée à rotation sur le châssis 210 au moyen d'un porte-vis supérieur 412 et un porte-vis inférieur 413 et entraînée par un moteur électrique.

Un tel type d'actionneur présente un encombrement réduit tout en présentant une robustesse et une précision importantes. La précision est notamment obtenue par l'effet de réduction découlant du pas de la vis 411 et de la résolution du moteur. En outre, la robustesse de ce type d'actionneur permet de limiter le besoin de frein moteur pour obtenir une position statique stable malgré la gravité.

Dans le mode de réalisation représenté, les porte-vis supérieurs 412 et inférieurs 413 sont fixés au montant 211 du châssis 210.

Sur la vis 411 se trouve un écrou 414, adapté à la vis 411. L'écrou 414 comporte une saillie 415.

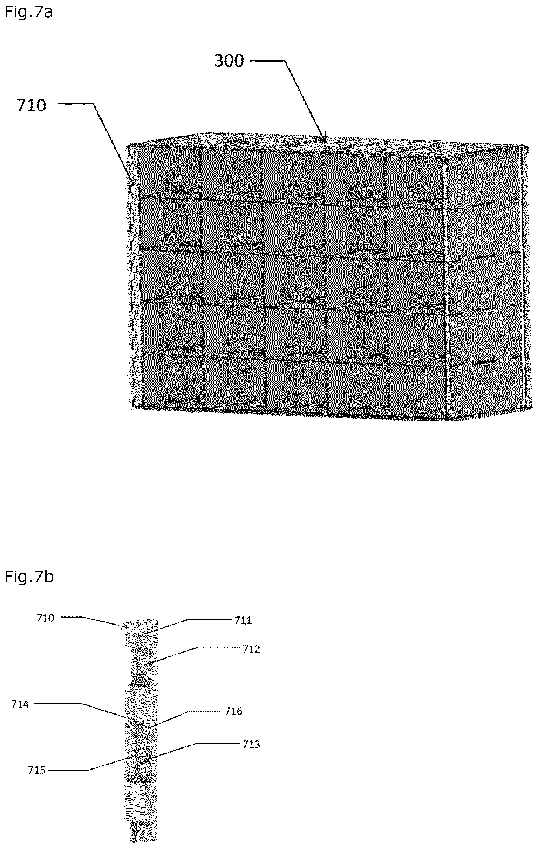

En référence aux figures 7a et 7b, l'empreinte verticale 710 est réalisée sur une saillie située le long d'une arête verticale du casier 300.

L'empreinte verticale 710 comporte une succession de créneaux 711 définissant entre eux des creux 712. Sur chaque créneau est réalisé un évidement borgne 713.

L'évidement borgne 713 comporte une face de support 714 délimitant supérieurement l'évidement borgne 713. La face de support 714 est configurée pour former une surface d'appui pour la saillie 415 de l'actionneur vertical 410.

L'évidement borgne 713 comporte en outre une surface d'obstacle 715 configurée pour former obstacle à la saillie 415 de l'actionneur vertical 410 et ainsi empêcher sa rotation.

De cette manière, lorsque la vis 411 est entraînée à rotation, entraînant par friction la saillie 415 en rotation, la saillie 415 entre en contact avec la surface d'obstacle 715 qui limite la rotation de la saillie 415, et donc de l'écrou 414, ce qui entraîne une translation de l'écrou 414, donc de la saillie 415 par rapport à la vis 411.

La saillie 415 entre ensuite en contact avec la face de support 714, ce qui a pour effet d'entrainer le casier 300 en translation.

On définit cette position de la saillie 415 comme la position enclenchée.

Optionnellement mais avantageusement, l'évidement borgne 713 comporte en outre un rebord anti-retour 716, formé par une portion de surface s'étendant en regard de la surface d'obstacle 715 depuis la face de support 714. Le rebord anti-retour 716 est configuré pour éviter que la saillie 415 ne se déloge de l'évidement borgne 713 en cas de perte de friction entre la saillie 415 et la face de support 714.

Ce cas de figure peut être rencontré par exemple au cours d'un mouvement de translation descendant.

Au cours du fonctionnement de l'actionneur vertical 410, lorsque la saillie 415 vient au contact du montant 211 du châssis 210, elle est bloquée dans son mouvement de rotation, et se déplace en translation verticale par le biais de la liaison hélicoïdale entre l'écrou 414 et la vis 411. La translation verticale peut être ascendante ou descendante selon le sens de rotation de la vis 411.

On définit le sens ascendant de la vis 411 comme le sens de rotation entraînant l'écrou 514 bloqué en rotation en translation verticale ascendante. De même, on définit le sens descendant de la vis 411 comme le sens de rotation entraînant l'écrou 514 bloqué en rotation en translation verticale descendante.

De même, lorsque la saillie 415 vient au contact d'un créneau 711, il est bloqué dans son mouvement de rotation, et se déplace en translation verticale.

Si la saillie 415, se déplaçant en translation verticale le long du créneau 711, arrive au niveau d'un évidement borgne 713 et que la vis 411 tourne dans le sens ascendant, la saillie 415 cesse son mouvement de translation verticale car elle n'est plus bloquée en rotation, et reprend un mouvement de rotation.

La saillie 415 rentre ensuite en contact avec la surface d'obstacle 715, et entraîne ainsi le casier 300 en translation comme précédemment décrit.

Lorsque la saillie 415, se déplaçant en translation verticale le long du créneau 711, arrive au niveau d'un creux 712, la saillie 415 reprend un mouvement de rotation et traverse alors le creux 712.

### L'actionneur horizontal 420

L'actionneur horizontal 420 comporte un ou plusieurs translateurs horizontaux 421.

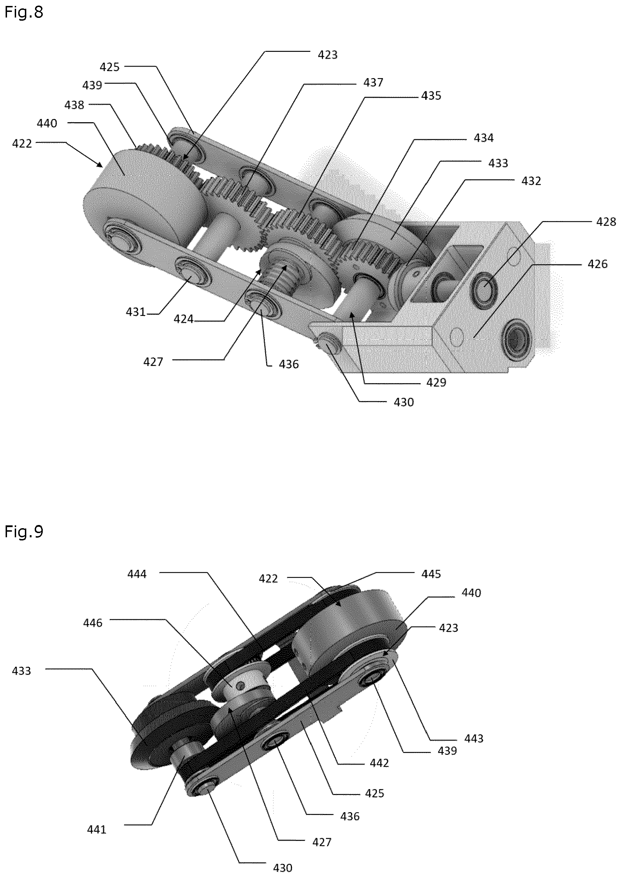

En référence à la figure 8, chaque translateur horizontal 421 comporte :
- un élément d'entrainement 422 configuré pour coopérer avec l'empreinte horizontale 720 du casier 300 de manière à entrainer le casier 300 en translation ;
- un actionneur d'entraînement 423 configuré pour entraîner en rotation l'élément d'entraînement 422 ;
- un dispositif d'embrayage 424 configuré pour, sélectivement, mettre en prise l'élément d'entraînement 422 et le casier 300 ou dégager l'élément d'entraînement 422 du casier 300.

Le dispositif d'embrayage 424, en permettant d'escamoter l'élément d'entraînement 422, permet ainsi de dégager l'espace et de permettre la circulation du casier 300 dans une direction différente de la direction d'entraînement de l'élément d'entraînement 422 escamoté. Cela permet notamment de pouvoir réaliser un entraînement d'un casier 300 dans les trois directions au sein d'un même module 200. En effet, si un contact entre l'élément d'entraînement 422 et le casier 300 est nécessaire à l'entraînement du casier 300 dans une première direction, ce contact s'oppose à la circulation du casier 300 dans une autre direction. La possibilité d'escamoter l'élément d'entraînement 422 supprime cet obstacle et permet donc le déplacement potentiel du casier 300 dans trois directions au sein d'un même module 200.

Dans le mode de réalisation représenté, le dispositif d'embrayage 424 comporte un bras mobile 425 monté à rotation sur un châssis de translateur 426 monté fixe sur le châssis 210, l'élément d'entrainement 422 étant monté à rotation à une extrémité du bras mobile 425, et un actionneur d'embrayage 427 configuré pour entraîner en rotation le bras mobile 425. L'élément d'entraînement 422 et l'actionneur d'entraînement 423 sont également montés sur le bras mobile 425.

Cela permet de limiter l'encombrement du translateur horizontal 421.

Dans un mode de réalisation, le translateur horizontal 421 comporte un arbre d'entrée 428 monté à rotation dans le châssis de translateur 426, et un ensemble de distribution 429 entraîné par l'arbre d'entrée 428, l'ensemble de distribution 429 étant configuré pour entraîner en rotation à la fois l'actionneur d'embrayage 427 et l'actionneur d'entraînement 423. Cela permet de limiter drastiquement le poids du dispositif, et le nombre de moteurs nécessaires au translateur horizontal 421.

Dans le mode de réalisation représenté, l'ensemble de distribution 429 comporte :
- un premier arbre intermédiaire 430 monté à rotation sur le châssis de translateur 426 selon un axe perpendiculaire à l'axe de l'arbre d'entrée 428, le premier arbre intermédiaire 430 étant entrainé en rotation par l'arbre d'entrée 428 au moyen d'un premier pignon conique 432 et d'un deuxième pignon conique 433 montés respectivement sur l'arbre d'entrée 428 et le premier arbre intermédiaire 430;
- un premier pignon 434, solidaire du deuxième pignon conique 433, monté sur le premier arbre intermédiaire 430 ;
- un deuxième pignon 435 monté à rotation sur un axe support 436 monté sur le bras mobile 425, le deuxième pignon étant entraîné en rotation par interaction avec le premier pignon 434, le deuxième pignon étant configuré pour entraîner l'actionneur d'embrayage 427 ;
- un deuxième arbre intermédiaire 431 monté à rotation sur le bras mobile 425 et comportant un troisième pignon 437 coopérant avec le deuxième pignon 435 et l'actionneur d'entraînement 423, de manière à transmettre la puissance de l'arbre d'entrée 428 à l'élément d'entraînement 422, par l'intermédiaire des pignons coniques 432, 433, du premier pignon 434, du deuxième pignon 435 et du troisième pignon 437.

Dans le mode de réalisation représenté, l'actionneur d'entraînement 423 comporte un pignon d'entraînement 438 monté à rotation sur un axe 439 monté sur le bras mobile 425.

L'élément d'entraînement 422 comporte un galet 440 solidaire du pignon d'entraînement 438, l'élément d'entraînement 422 coopérant avec l'empreinte horizontale 720 du casier 300.

Dans un mode de réalisation, le galet 440 est cylindrique et l'empreinte horizontale 720 est un plan incliné par rapport à l'horizontale. Cela permet ainsi de réaliser simultanément le guidage et l'entraînement du casier 300 lorsqu'il se déplace horizontalement. L'angle d'inclinaison de l'empreinte horizontale peut être compris entre 30° et 60°, préférentiellement 45°.

Dans le mode de réalisation représenté, les empreintes horizontales 720 sont situées sur les arêtes inférieures du casier 300. Les empreintes horizontales 720 peuvent être un chanfrein appliqué tout le long desdites arêtes, qui peut avantageusement être recouvert d'une bande de matériau à fort coefficient de friction comme du caoutchouc.

Dans un autre mode de réalisation représenté en figure 9, l'ensemble de distribution 429 comporte :
- une première poulie 441 montée sur un premier arbre intermédiaire 430, le premier arbre intermédiaire 430 étant monté à rotation sur le châssis de translateur 426 selon un axe perpendiculaire à l'axe de l'arbre d'entrée 428, et étant entrainé en rotation par l'arbre d'entrée 428 au moyen d'un premier pignon conique 432 et d'un deuxième pignon conique 433 montés respectivement sur l'arbre d'entrée 428 et le premier arbre intermédiaire 430 ;
- une deuxième poulie 443 montée à rotation sur un axe 439 monté sur le bras mobile 425, la deuxième poulie 443 étant configurée pour entraîner l'élément d'entraînement 422 ;
- une première courroie 442 coopérant avec la première poulie 441 et la deuxième poulie 443 ;
- une troisième poulie 445 montée à rotation sur l'axe 439, la troisième poulie 445 étant solidaire en rotation avec la deuxième poulie 443 ;
- une quatrième poulie 446 montée à rotation sur un axe support 436 monté sur le bras mobile 425, la quatrième poulie 446 étant configurée pour entraîner l'actionneur d'embrayage 427 ;
- une deuxième courroie 444 coopérant avec la troisième poulie 445 et la quatrième poulie 446.

L'utilisation de courroies permet de limiter le nombre de pièces du dispositif, ainsi que le coût de fabrication de l'ensemble de distribution 429.

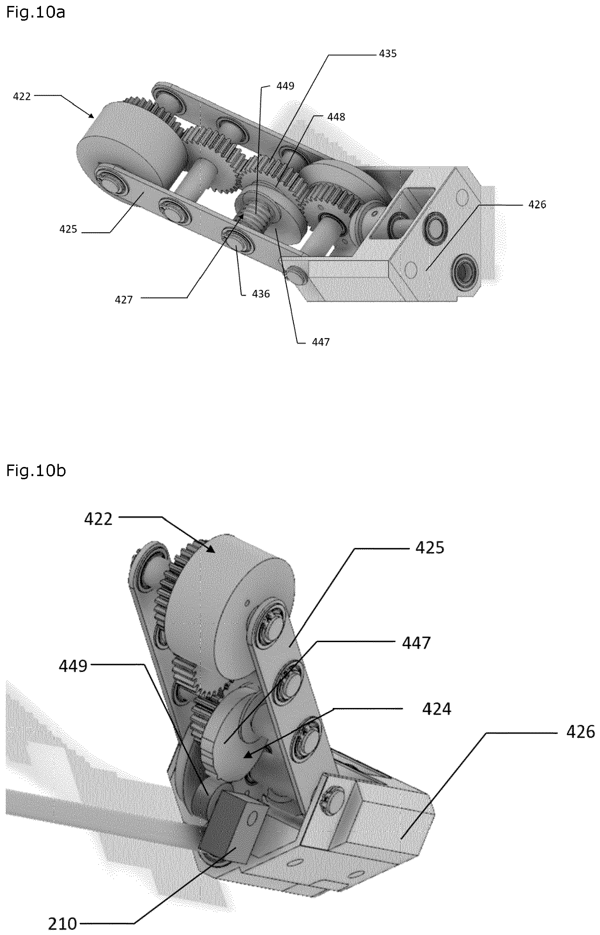

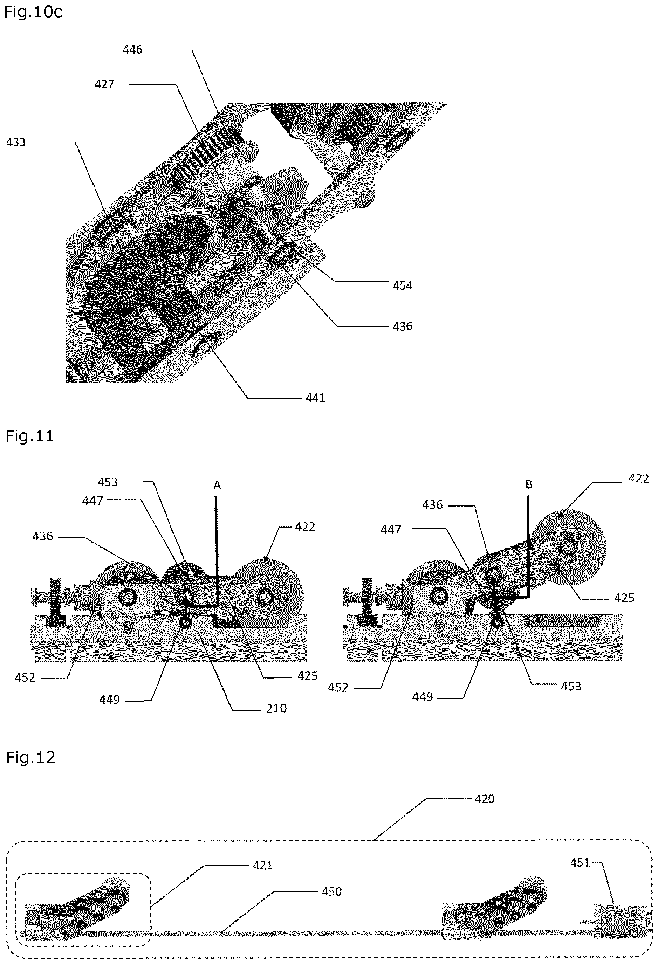

En référence aux figures 10a, 10b et 10c l'actionneur d'embrayage 427 comporte une came 447 montée à rotation sur l'axe support 436. La came 447 est entraînée en rotation par un dispositif de friction 455. Le dispositif de friction est configuré pour transmettre un couple limité à la came 447. Ainsi, si la came 447 est bloquée en rotation par un obstacle, l'ensemble de distribution 429 peut continuer à fonctionner malgré l'immobilisation de la came 447.

Dans un mode de réalisation illustré en figure 10a, le dispositif de friction 455 comporte une rondelle de friction 448 intercalée entre le deuxième pignon 435 et la came 447. Dans le mode de réalisation illustré en figure 9, la rondelle de friction 448 est située entre la quatrième poulie 446 et la came 447. La rondelle de friction 448 assure ainsi l'entraînement par friction de la came 447 en transmettant le couple provenant du deuxième pignon 435 ou de la quatrième poulie 446. Un ressort de compression 449 monté sur l'axe support 436 et comprimé entre le bras mobile 425 et la came 447 permet d'assurer l'effort de friction nécessaire à l'entraînement de la came 447.

Dans un autre mode de réalisation illustré en figure 10c, le dispositif de friction 455 comporte une bague fendue 454 solidaire de la came 447. L'ensemble Came 447 et bague fendue 454 est monté à rotation sur l'axe support 436. Dans ce mode de réalisation, l'axe support 436 est entraîné en rotation par la quatrième poulie 446, ou le deuxième pignon 435. La bague fendue 454 assure un effort de friction sur l'axe support 436, ce qui permet de transmettre le couple de l'arbre support 436 à la came 447 et ainsi d'entrainer l'ensemble came 447 et bague fendue 454 en rotation. Une telle structure permet de limiter les déformations du dispositif de friction 455 et de faciliter son montage.

La came 447 est configurée pour coopérer avec un galet de came 449 monté à rotation sur le châssis 210.

La came 447 présente un profil symétrique par rapport à un plan passant par l'axe de rotation de la came 447. Cela permet d'embrayer le dispositif d'embrayage 424 quel que soit le sens de rotation de l'arbre d'entrée 428.

En référence à la figure 11, le profil de la came 447 est configuré pour présenter, dans une première position angulaire, une première distance A entre l'axe support 436 et l'axe de rotation du galet de came 449, et dans une deuxième position angulaire, une deuxième distance B entre l'axe support 436 et l'axe de rotation du galet de came 449.

La première distance A est configurée de telle manière que le dispositif d'embrayage 424 est en position débrayée, dans laquelle l'élément d'entraînement 423 est dégagé du casier 300. De cette manière, le casier 300 n'interagit pas avec l'élément d'entraînement 422 quel que soit le déplacement dudit casier 300.

La deuxième distance B est configurée de telle manière que le dispositif d'embrayage 424 est en position embrayée, dans laquelle l'élément d'entraînement 422 coopère avec l'empreinte horizontale 720 du casier 300.

Avantageusement, le dispositif d'embrayage 424 est configuré de telle manière que l'élément d'entraînement 422 se déploie dans un plan incliné par rapport à la verticale et à l'horizontale, et vers l'intérieur du châssis 210. De cette manière, le dégagement des faces latérales du châssis 210 est amélioré. En outre, cela permet d'entraîner l'élément d'entraînement 422 et de déployer le dispositif d'embrayage 424 sans utiliser de renvoi d'angle. Cette mutualisation permet de réduire le nombre de pièces et permet d'atteindre un meilleur rendement. L'angle d'inclinaison par rapport à l'horizontale est compris entre 30° et 60°, et préférentiellement 45°.

Une ouverture sur les premières barres 402 et les secondes barres 403 est aménagée de sorte que le translateur horizontal 421 est au moins partiellement logé dans lesdites barres lorsque le dispositif d'embrayage 424 est en position débrayée. Cela permet d'améliorer la compacité du dispositif.

Optionnellement, l'actionneur horizontal 420 comporte une butée angulaire 452 configurée pour limiter l'amplitude du mouvement de rotation du bras mobile 425 par rapport au châssis 210.

La butée angulaire 452 peut être positionnée à une extrémité du bras mobile 425, de manière à entrer en contact avec le châssis 210 lorsque le bras mobile 425 atteint une certaine position angulaire.

Un ergot de butée 453 peut être réalisé sur la came 447 de manière à limiter la rotation de la came 447 lorsque l'ergot de butée 453 arrive en contact du galet de came 449.

Optionnellement, l'ergot de butée 453 est positionné de telle manière que le bras mobile 425 est en position haute lorsque l'ergot de butée 453 arrive au contact du galet de came 449.

Avantageusement, l'ergot de butée 453 est configuré de telle manière qu'il permet d'obtenir une position haute du bras mobile 425 stable lorsque l'ergot de butée 453 est au contact du galet de came 449.

Optionnellement, l'actionneur horizontal 420 comporte une butée angulaire 452 et un ergot de butée 453, ce qui permet d'améliorer la robustesse de l'actionneur horizontal 420. L'effet conjoint de la butée angulaire 452 et de l'ergot de butée 453 permet d'empêcher à l'ergot de butée 453 de dépasser le galet de came 449 par la limitation mécanique du déplacement angulaire du bras mobile 425, grâce à la butée angulaire 452.

Dans une alternative non représentée, la butée angulaire 452 est réalisée sur le châssis, et est configurée pour limiter le mouvement du bras mobile 425 lorsque celui-ci atteint une certaine position angulaire.

Dans un mode de réalisation préférentiel, en référence à la figure 12, un actionneur horizontal 420 comporte plusieurs translateurs horizontaux 421, un arbre de transmission 450 et un moteur électrique 451 configuré pour entraîner l'arbre de transmission 450, l'arbre de transmission 450 étant configuré pour entraîner simultanément les translateurs horizontaux 421.

Cela permet d'entraîner simultanément tous les translateurs horizontaux 421 d'un actionneur horizontal 420 au moyen d'un seul moteur, ce qui permet de favoriser le synchronisme, de limiter le nombre de moteurs d'un actionneur horizontal 420, limitant de ce fait les coûts, le risque de panne et l'encombrement d'un actionneur horizontal 420.

Les translateurs horizontaux 421 sont positionnés les uns par rapport aux autres de telle manière que la distance entre deux translateurs horizontaux adjacents 421 d'un même module 200 ou de deux modules 200 adjacents est inférieure à la moitié de la longueur de l'empreinte horizontale 720. Cela permet d'éviter le basculement d'un casier 300 lors de son entraînement.

Dans une variante, les premières barres 212 et deuxièmes barres 213 sont équipées de rouleaux de guidage (non représentés) configurés pour soutenir le casier 300 lors de son déplacement entre deux modules 200 adjacents, ce qui permet de limiter le nombre de translateurs horizontaux 421 nécessaires à l'entraînement et au guidage du casier 300.

L'entraînement de l'arbre de transmission 450 par le moteur électrique 451 peut être direct, ou indirect, par exemple au moyen d'un ensemble poulies-courroie, qui permet de préserver le fonctionnement malgré les vibrations ou les désalignements. En outre, cela favorise la compacité de l'actionneur horizontal 420.

### Fonctionnement du dispositif

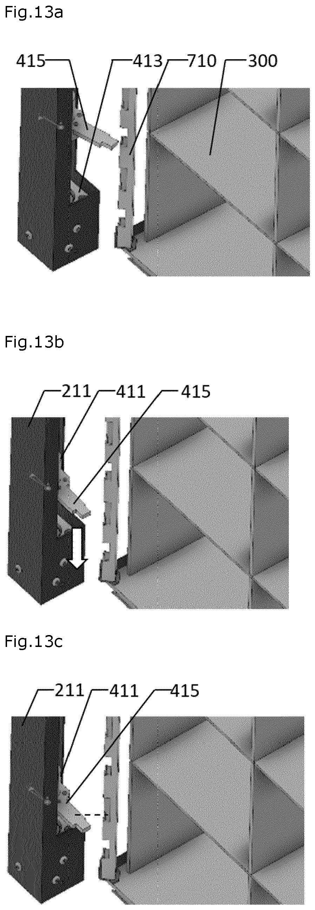

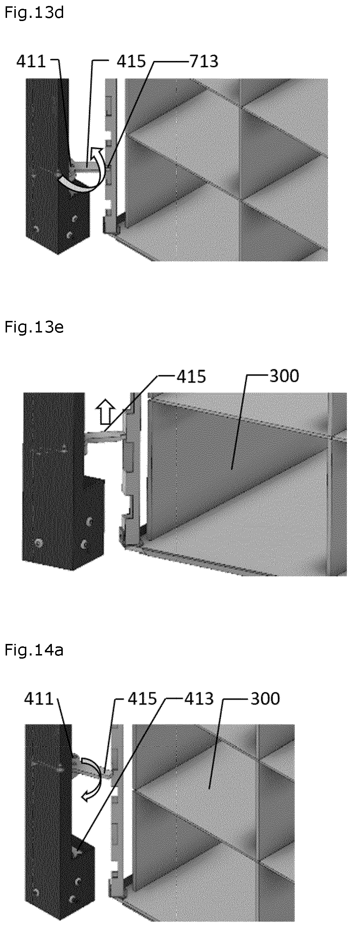

Pour réaliser un mouvement de translation vertical ascendant du casier 300, le procédé de déplacement peut être le suivant :
- en référence à la figure 13a, la saillie 415 est positionnée à une hauteur quelconque entre le porte vis supérieur 412 (non représenté sur la figure 13a) et le porte vis inférieur 413;
- en référence à la figure 13b, la vis 411 est entraînée dans le sens descendant, jusqu'à ce que la saillie 415 rencontre le montant 211 du châssis 210 ; comme décrit plus haut, la saillie 415 descend alors le long du montant 211 ;
- en référence à la figure 13c, la saillie 415 descend jusqu'à atteindre un seuil bas prédéfini;
- en référence à la figure 13d, la vis 411 est ensuite entraînée dans le sens ascendant jusqu'à ce que la saillie 415 passe en position enclenchée dans l'évidement borgne 713 ;
- en référence à la figure 13e, le casier 300 est ainsi entraîné vers le haut.

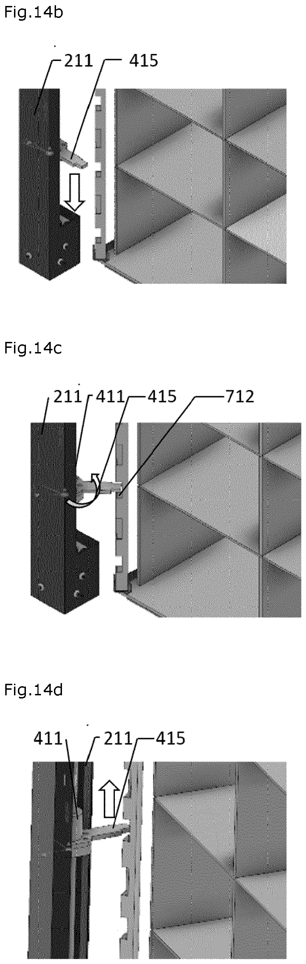

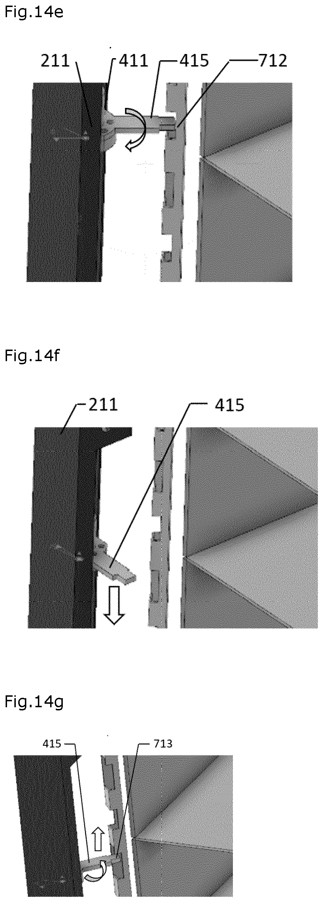

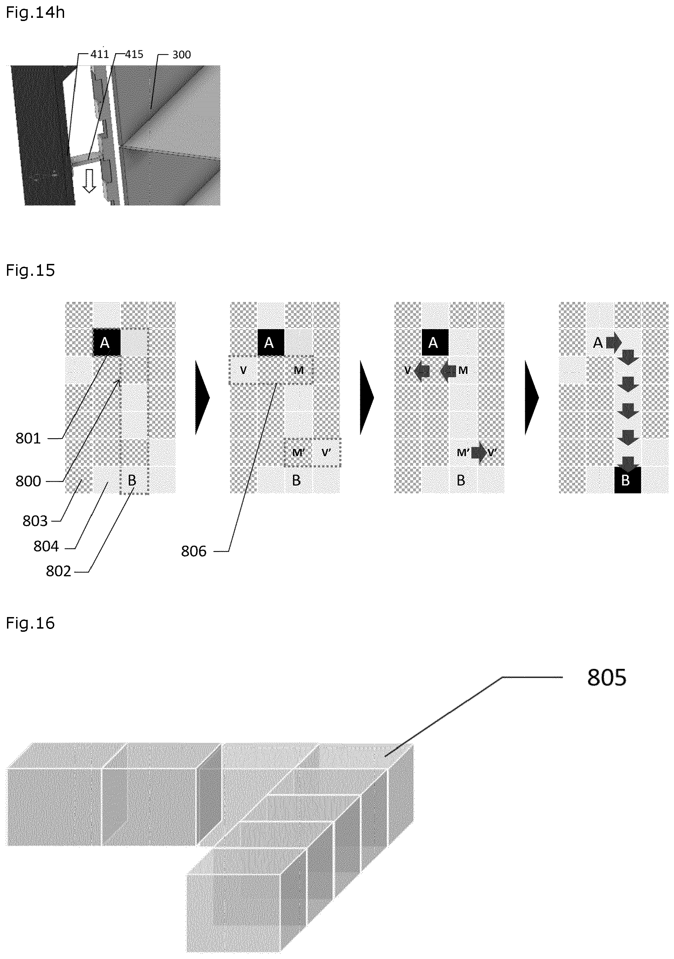

Pour réaliser un mouvement de translation vertical descendant du casier 300, le procédé de déplacement peut être le suivant :
- en référence à la figure 14a, la saillie 415 est positionnée à une hauteur quelconque entre le vis supérieur 412 (non représenté en figure 14a) et le porte vis inférieur 413 ; la vis 411 est entraînée dans le sens descendant ;
- en référence à la figure 14b, comme décrit plus haut, la saillie 415 une fois en contact avec le montant 211 descend alors le long de celui-ci ;
- en référence à la figure 14c, lorsque la saillie 415 atteint le niveau du creux 712 le plus proche de la position initiale, la vis 411 tourne dans le sens ascendant et traverse le creux 712 jusqu'à ce que la saillie 415 passe à travers le creux 712 et atteigne le montant 211 du châssis 210;
- en référence à la figure 14d, la vis 411 continue de tourner dans le sens ascendant et la saillie 415 est bloquée en rotation contre le montant 211, ce qui provoque le déplacement de la saillie 415 vers le haut jusqu'à un seuil haut prédéfini ;
- en référence à la figure 14e, lorsque la saillie 415 atteint le niveau du creux 712 le plus proche de la position initiale, la vis 411 tourne dans le sens descendant et traverse le creux 712 jusqu'à ce que la saillie 415 atteigne le montant 211 du châssis 210 ;
- en référence à la figure 14f, la saillie 415 une fois en contact avec le montant 211 descend alors le long de celui-ci
- en référence à la figure 14g, lorsque la saillie 415 atteint l'évidement borgne 713 le plus haut, la vis 411 tourne dans le sens ascendant jusqu'à ce que la saillie 415 passe en position enclenchée.
- en référence à la figure 14h, La vis 411 tourne alors dans le sens descendant, faisant descendre le casier 300.

Pour réaliser un mouvement de translation horizontal du casier 300 dans la direction de l'arbre de transmission 450 dans un sens, qu'on appellera arbitrairement sens avant, le procédé de déplacement peut être le suivant :
- La position angulaire initiale de la came 447 est la position basse.
- L'arbre de transmission 450 est entraîné en rotation par le moteur 451, ce qui entraîne en rotation chaque arbre d'entrée 428, puis chaque deuxième pignon conique 433 par l'intermédiaire de chaque premier pignon conique 432.

- Le deuxième pignon conique 433 entraîne en rotation le premier pignon 434, qui entraîne en rotation le deuxième pignon 435, qui entraîne en rotation le troisième pignon 437, qui entraîne en rotation le pignon d'entrainement 438, qui entraîne en rotation le galet 440.
- Par friction avec la rondelle de friction 448, la came 447 est entraînée en rotation et quitte la position basse. La came 447 tourne jusqu'à atteindre l'une des deux positions hautes où le dispositif d'embrayage 424 est en position embrayée. Le bras mobile 425 arrive alors en position haute contre une butée 452 qui empêche la came 447 de tourner davantage. La came 447 reste bloquée en position haute et frotte contre la rondelle de friction 448 qui continue de tourner sous l'action du deuxième pignon 435.
- En position haute, le galet 440 entre en contact avec l'empreinte horizontale 720 du casier 300. Le galet 440, étant en rotation, entraîne par friction le casier 300.

Une fois le mouvement achevé, il est possible de rétracter le dispositif d'embrayage 424 du translateur horizontal 421.
- En faisant tourner le moteur 451 dans le sens inverse au précédent, un sens qu'on appellera arbitrairement sens arrière, la came 447 est entraînée en rotation par friction dans le sens opposé à sa montée précédente.
- La came 447 n'est plus empêchée de tourner par la ou les butées, elle tourne donc jusqu'à atteindre la position basse.
- En arrêtant le moteur 451, le dispositif d'embrayage 424 reste dans la position basse de la came 447.

### Procédé P1 : Procédé de déplacement d'un casier cible (d'un module A à un module B)

En référence aux figures 15a, 15b, 15c, 15d, différentes étapes d'un procédé de déplacement d'un casier 300 cible sont représentées.

Dans le procédé représenté, la direction verticale est relative à la disposition du système dans des conditions normales d'utilisation du système 1, les directions transversales et longitudinales d'utilisation sont les directions horizontales.

Dans le procédé représenté, un ou plusieurs casiers 300 cibles sont déplacés à travers les modules 200 d'un chemin 800 défini tel que :
- le chemin 800 est une suite de N modules 200 adjacents 2 à 2 (module 1, module 2, ...., module n-1 , module n, module n+1, ..., module N).
   ∘ On appelle longueur du chemin le nombre N de modules le constituant.
   ∘ Pour un module n donné du chemin, le module précédent dans l'ordre du chemin est appelé module précédent n-1.
   ∘ Pour un module n donné du chemin, le module suivant dans l'ordre du chemin est appelé module suivant n+1.
   ∘ Un module commençant un chemin est appelé module initial 801.
   ∘ Un module terminant un chemin est appelé module final 802.
   ∘ Un chemin «A-B» est un chemin dont le module initial 801 est le module A et le module final 802 est le module B.
- un module en « état plein » 803 est un module qui contient un casier à un instant donné
- un module en « état vide » 804 est un module qui ne contient pas de casier à un instant donné
- un virage 805 d'un chemin, tel qu'illustré en figure 16, est un module n dudit chemin tel que le module précédent n-1, ledit module n et le module suivant n + 1 ne sont pas alignés.

Dans le procédé décrit, on appelle déplacement élémentaire un déplacement d'un casier d'un module à un de ses modules adjacents, commande un ordre de déplacement élémentaire généré par le contrôleur central 600 à destination des modules, et séquence un ensemble simultané de commandes à destination de plusieurs modules.

On appelle ici casier cible le ou les casiers que l'on cherche à acheminer d'un module A à un module B, pour les différencier des casiers stockés dans la structure et qui seront déplacés pour libérer le chemin des casiers cible.

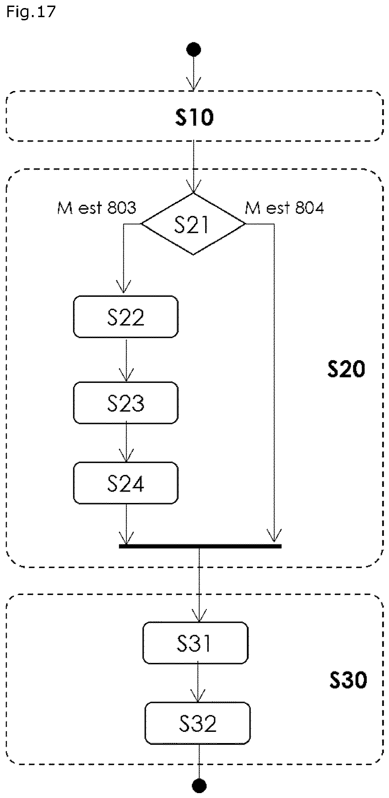

Les étapes du procédé de déplacement d'un casier P1 sont représentées en figure 17.

Dans une première macro-étape S10, le contrôleur central 600 met en oeuvre un programme configuré pour déterminer le chemin « A-B » le plus pertinent entre le module A et le module B. Il réalise cette détermination selon deux critères non restrictifs : la longueur du chemin la plus courte (N minimal), et le nombre minimal de virages 805 dans ce chemin.

Au cours de l'étape S10, le module initial 801 et le module final 802 sont localisés dans le maillage formé par les modules 200 du système 1.

Un vecteur de déplacement composé des composantes de déplacement élémentaire du casier 300 est généré pour évaluer le déplacement à faire réaliser au casier 300.

Différents chemins sont ensuite estimés et comprennent chacun les composantes du vecteur de déplacement.

Chacun des chemins est ensuite évalué en fonction du nombre de virages 805 compris dans chaque chemin respectif.

Le chemin comportant le moins de virages 805 est converti en séquences d'ordres de déplacements élémentaires à destination des modules 200, de manière à amener le casier 300 du module initial 801 au module final 802.

Ensuite, dans une deuxième macro-étape S20, le chemin qui a été déterminé dans la macro-étape S10 est libéré, ce qui se réalise en plusieurs étapes décrites ci-après.

Dans une étape S21, le contrôleur central 600 vérifie pour chaque module M appartenant au chemin « A-B » déterminé s'il est en « état plein » 803 ou en « état vide » 804. Dans le cas où il est en « état vide » 804, aucune action n'est requise.

Dans le cas où il est en « état plein » 803, plusieurs actions sont nécessaires pour libérer le chemin. Dans une étape S22, le contrôleur central 600 détermine le module V qui est en « état vide » hors du chemin « A-B » et pour lequel le chemin « M-V » a la plus courte longueur N. Ce chemin est appelé chemin d'échappement 806.

Ensuite, dans une étape S23, le contrôleur central génère une suite de commandes de déplacements élémentaires qui est propagée aux différents modules appartenant au chemin d'échappement 806 (tel que décrit ci-après dans le procédé de propagation de commande P3).

Enfin, dans une étape S24, chaque module du chemin d'échappement 806 déplace alors le casier à son module suivant selon la commande reçue (tel que décrit ci-après dans le procédé de déplacement élémentaire d'un casier P2), de manière à faire passer le module initial 801 d'un état plein à un état vide, et le module final 802 d'un état vide à un état plein.

Dans une troisième macro-étape S30, le casier cible est avancé d'un bout à l'autre du chemin « A-B » qui a été déterminé en macro-étape S10 et libéré en macro-étape S20. Pour cela, plusieurs étapes sont nécessaires et décrites ci-après.

Dans une étape S31, le contrôleur central génère une suite de commandes de déplacements élémentaires qui est propagée aux différents modules du Chemin « A-B ».

Ensuite dans une étape S32, chaque module du chemin « A-B » déplace alors le casier à son module suivant selon la commande reçue, de manière à déplacer le casier du module A jusqu'au module B. Le procédé de déplacement de casier P1 est alors terminé.

Avantageusement, la macro-étape S30 peut être lancée avant la fin de la macro-étape S20. En effet, si le module suivant n+1 du chemin est en état vide, le casier 300 cible peut être déplacé du module n au module suivant n+1. Ceci permet d'accélérer le déplacement du casier 300 cible.

Concernant le procédé de déplacement de casier P1 dans sa globalité, en cas de multiples déplacements en parallèle, plusieurs chemins sont avantageusement construits en parallèle, de manière à augmenter le flux du système 1.

### Procédé P2 : Procédé de déplacement élémentaire d'un casier (d'un module A à un de ses modules adjacents C)

Dans le procédé représenté, le casier à déplacer se trouve au départ dans un module noté « module A ».

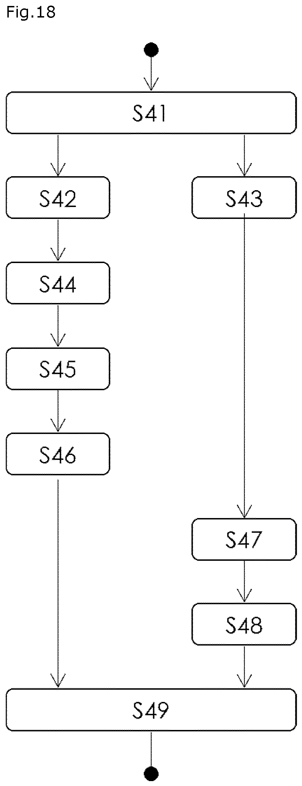

Les étapes du procédé de déplacement élémentaire d'un casier P2 sont ci-après présentées en détail, illustrée par un logigramme en figure 18.

Dans une première étape S41, le contrôleur central génère et propage un message dans le réseau de modules (tel que décrit ci-après dans le procédé de propagation des commandes P3), ce message comportant la commande de déplacement élémentaire du casier présent dans le module A vers un de ses modules adjacents C.

Deux étapes sont ensuite exécutées parallèlement. Dans une étape S42, l'élément de commande 500 du module A reçoit la commande de déplacer le casier vers le module adjacent C, et dans une étape S43, l'élément de commande 500du module C reçoit la Commande de recevoir le casier venant du module A.

Dans une étape S44 suivant l'étape S42, l'élément de commande 500du module A pilote les moteurs dudit module.

Dans une étape S45 les actionneurs 400 du module A associés au mouvement sont déployés, et les autres actionneurs 400 du module A qui sont déjà déployés sont simultanément rétractés. Si les actionneurs 400 associés au mouvement sont déjà en position déployée, ils sont seulement mis en mouvement. Cela permet, dans une étape S46, de translater le casier en direction du module C.

Dans une étape S47 suivant l'étape S43, l'élément de commande 500 du module C pilote les moteurs dudit module.

Dans une étape S48 les actionneurs 400 du module C associés au mouvement sont déployés, et les autres actionneurs 400 du module C qui sont déjà déployés sont simultanément rétractés. Si les actionneurs 400 associés au mouvement sont déjà en position déployée, ils sont seulement mis en mouvement.

Suite à l'étape S48, l'étape S49, dans la continuité de la translation commencée en étape S46, poursuit la translation du casier depuis le module A vers le module C jusqu'à ce que le casier se trouve au sein du module C. Le procédé de déplacement élémentaire d'un casier P2 est alors terminé.

### Procédé P3 : Procédé de propagation des commandes

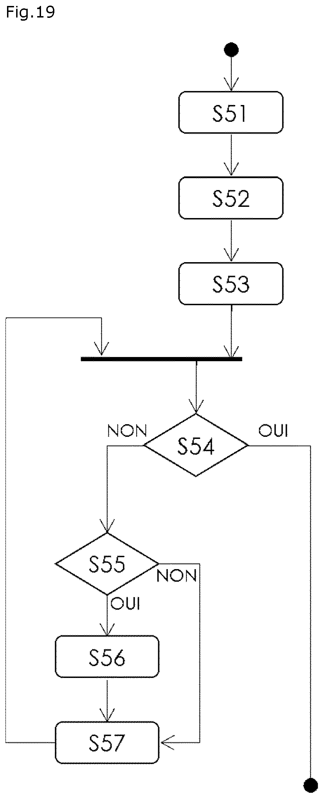

Les étapes du procédé de propagation de commandes P3 sont ci-après présentées en détail, illustrées par un logigramme en figure 19.

Dans une première étape S51, le contrôleur central 600 génère une suite de Séquences.

Dans une deuxième étape S52, le contrôleur central 600 génère un « message » comportant une liste de modules devant effectuer un déplacement élémentaire, ainsi que les informations de direction et de sens dans lequel effectuer ces déplacements élémentaires.

Dans une troisième étape S53, le contrôleur central 600 envoie le message au premier module connecté électroniquement au contrôleur central 600.

Le module récepteur, via son élément de commande 500, vérifie dans une étape S54 s'il a déjà reçu le message. Sinon il ne fait plus rien. S'il n'a pas encore reçu le message, il vérifie dans une étape S55 s'il fait partie de la liste de modules contenue dans le message. Si oui, dans une étape S56, l'ordre est pris en compte par le module_récepteur. Sinon le module récepteur passe l'étape S56.

Dans une étape S57, l'élément de commande 500 du module récepteur propage le message vers les modules adjacents au module récepteur. Chacun de ces modules va à l'étape S54, et poursuit jusqu'à ce que tous les modules aient reçu le message, auquel cas le procédé de propagation de commande P3 se termine.

Un tel procédé P3 est particulièrement avantageux dans une architecture de type réseau, telle que celle du système 1. Cela permet de faire transiter les consignes et informations par les modules de proche en proche, ce qui permet de limiter le câblage nécessaire au fonctionnement du système 1. En outre, cela permet de remplacer plus simplement un module 200 lorsque celui-ci est détérioré.

## Revendications

1. Système (1) modulaire de déplacement d'éléments de stockage comportant une pluralité de modules (200) adjacents et au moins un casier (300) apte à être déplacé dans la structure modulaire d'un module (200) à un module (200) adjacent,
un module (200) comportant un châssis (210) de forme parallélépipédique rectangle comportant des barres (212, 213, 214, 215) assemblées entre elles, au moins un parmi les modules (200) et casiers (300) comportant au moins un actionneur (400) et l'autre parmi les modules (200) et casiers (300) comportant des empreintes (700) complémentaires, un parmi les actionneurs (400) et les empreintes (700) étant fixé aux barres (212, 213, 214, 215) du châssis (210), l'autre parmi les actionneurs (400) et les empreintes (700) étant fixé au casier (300), les actionneurs (400) et empreintes (700) étant configurés pour coopérer de manière à entraîner en translation un casier (300) situé au moins partiellement dans un module (200) vers un module (200) adjacent,
le système (1) comportant en outre un contrôleur central (600), configuré pour piloter les actionneurs (400) et gérer le déplacement du casier (300) dans le système (1), et **caractérisé en ce qu'**un actionneur (400) comporte un élément d'entraînement (422) configuré pour être en prise avec les empreintes (700), et un dispositif d'embrayage (424) est configuré pour escamoter l'élément d'entraînement (422) dans une position débrayée dans laquelle l'élément d'entraînement (422) est à distance des empreintes (700) de sorte que l'élément d'entraînement (422) n'interagit pas avec les empreintes (700).

2. Système (1) selon la revendication 1, dans lequel les actionneurs (400) d'un module (200) sont aptes à entraîner le casier (300) en translation selon 3 dimensions.

3. Système (1) selon l'une des revendications 1 ou 2 en combinaison avec la revendication 2, dans lequel lors de son escamotage, l'élément d'entraînement (422) se déplace dans un plan incliné par rapport aux faces du module (200), l'inclinaison étant comprise entre 30° et 60°.

4. Système (1) selon l'une des revendications 1 à 3, dans lequel l'actionneur (400) comporte un actionneur vertical (420) comportant une vis (411) sans fin montée à rotation sur le châssis (210), un écrou (414) coopérant avec la vis (411), l'écrou (414) comportant une saillie (415) configurée pour coopérer avec une empreinte verticale (710) réalisée le long d'une arête verticale du casier (300), de manière à entraîner le casier (300) en translation verticale lorsque la saillie (415) coopère avec l'empreinte verticale (710) et que la vis (411) est entraînée en rotation.

5. Système (1) selon l'une des revendications 1 à 4, dans lequel l'actionneur (400) comporte un actionneur horizontal (420) comportant au moins un translateur horizontal (421) comportant :
- un élément d'entrainement (422) configuré pour coopérer avec une empreinte horizontale (720) réalisée sur le casier (300) de manière à entrainer le casier (300) en translation ;
- un actionneur d'entraînement (423) configuré pour entraîner en rotation l'élément d'entraînement (422) ;
- un dispositif d'embrayage (424) configuré pour, sélectivement, mettre en prise l'élément d'entraînement (422) et le casier (300) ou dégager l'élément d'entraînement (422) du casier (300).

6. Système (1) selon la revendication 5, dans lequel l'actionneur horizontal (420) comporte plusieurs translateurs horizontaux (421), un arbre de transmission (450) et un moteur électrique (451) configuré pour entraîner l'arbre de transmission (450), l'arbre de transmission (450) étant configuré pour entraîner simultanément les translateurs horizontaux (421).

7. Système (1) selon l'une des revendications 5 ou 6, dans lequel le dispositif d'embrayage (424) comporte :
- un bras mobile (425) monté à rotation sur un châssis de translateur (426) monté fixe sur le châssis (210), l'élément d'entrainement (422) étant monté à rotation à une extrémité du bras mobile (425), et
- un actionneur d'embrayage (427) configuré pour entraîner en rotation le bras mobile (425), l'élément d'entraînement (422) et l'actionneur d'entraînement (423) étant également montés sur le bras mobile (425).

8. Système (1) selon la revendication 7, dans lequel le translateur horizontal (421) comporte en outre un arbre d'entrée (428) monté à rotation dans un châssis de translateur (426), et un ensemble de distribution (429) entraîné par l'arbre d'entrée (428), l'ensemble de distribution (429) étant configuré pour entraîner en rotation à la fois l'actionneur d'embrayage (427) et l'actionneur d'entraînement (423).

9. Système (1) selon la revendication 8, dans lequel le dispositif d'embrayage (424) comporte un actionneur d'embrayage (427) comportant :
- une came (447) montée à rotation sur le bras mobile (425) ;
- un ensemble de friction (455) configuré pour transmettre un couple limité de l'ensemble de distribution (429) à la came (447) et ainsi assurer l'entraînement en rotation de la came (447) ;
- un galet de came (449) monté à rotation sur le châssis (210) configuré pour coopérer avec la came (447).

10. Procédé de déplacement d'un casier (300) cible entre un module initial (801) et un module final (802) dans un système (1) modulaire de déplacement d'éléments de stockage selon une des revendications 1 à 9, comprenant les étapes de :
- S10 : Détermination d'un chemin entre le module initial (801) et le module final (802), le chemin comportant N modules (200),
- S20 : Déplacements des casiers (300) situés sur le chemin précédemment déterminé de manière à libérer le chemin,
- S30 : Déplacement du casier (300) cible vers le module final (802) en passant par les modules (200) du chemin, l'étape de déplacement du casier cible étant effectuée à chaque fois que le module du chemin adjacent au casier cible est libéré.

11. Produit programme d'ordinateur comportant des données de code configurées pour, lorsqu'elles sont mises en oeuvre par une unité de calcul, mettre en oeuvre un procédé de déplacement d'un casier (300) selon la revendication 10 dans un système (1) modulaire de déplacement d'éléments de stockage selon l'une des revendications 1 à 9.

## Patentansprüche

1. Modulares System (1) zum Bewegen von Lagerelementen, umfassend
eine Vielzahl von aneinandergrenzenden Modulen (200) und mindestens ein Fach (300), das in der modularen Struktur von einem Modul (200) zu einem angrenzenden Modul (200) bewegt werden kann,
ein Modul (200), das ein quaderförmiges Gestell (210) umfasst, das Stangen (212, 213, 214, 215) umfasst, die zusammengefügt sind, wobei mindestens eines der Module (200) und Fächer (300) mindestens ein Stellglied (400) umfasst, und das andere von den Modulen (200) und Fächern (300) sich ergänzende Vertiefungen (700) umfasst, wobei eines von den Stellgliedern (400) und den Vertiefungen (700) an den Stangen (212, 213, 214, 215) des Gestells (210) befestigt ist, wobei das andere von den Stellgliedern (400) und den Vertiefungen (700) an dem Fach (300) befestigt ist, wobei die Stellglieder (400) und die Vertiefungen (700) dazu konfiguriert sind, derart zusammenzuwirken, dass ein Fach (300), das sich mindestens teilweise in einem Modul (200) befindet, in Richtung auf ein angrenzendes Modul (200) translatorisch angetrieben wird,
wobei das System (1) außerdem ein zentrales Steuergerät (600) umfasst, das dazu konfiguriert ist, die Stellglieder (400) anzusteuern und die Bewegung des Fachs (300) in dem System (1) zu handhaben, und
**dadurch gekennzeichnet, dass** ein Stellglied (400) ein Antriebselement (422) umfasst, das dazu konfiguriert ist, mit den Vertiefungen (700) in Eingriff zu stehen, und eine Kupplungsvorrichtung (424) dazu konfiguriert ist, das Antriebselement (422) in eine ausgekuppelte Position zu versenken, in der das Antriebselement (422) von den Vertiefungen (700) entfernt ist, so dass das Antriebselement (422) nicht mit den Vertiefungen (700) interagiert.

2. System (1) nach Anspruch 1, wobei die Stellglieder (400) eines Moduls (200) dazu geeignet sind, das Fach (300) translatorisch in 3 Dimensionen anzutreiben.

3. System (1) nach einem der Ansprüche 1 oder 2 in Kombination mit Anspruch 2, wobei sich das Antriebselement (422) beim Versenken in einer Ebene bewegt, die im Verhältnis zu den Seiten des Moduls (200) geneigt ist, wobei die Neigung zwischen 30° und 60° liegt.

4. System (1) nach einem der Ansprüche 1 bis 3, wobei das Stellglied (400) ein senkrechtes Stellglied (420) umfasst, das eine Schnecke (411) umfasst, die drehbar an dem Gestell (210) gelagert ist, wobei eine Mutter (414) mit der Schnecke (411) zusammenwirkt, , wobei die Mutter (414) einen Vorsprung (415) umfasst, der dazu konfiguriert ist, mit einer senkrechten Vertiefung (710) zusammenzuwirken, die entlang einer senkrechten Kante des Fachs (300) ausgebildet ist, um das Fach (300) senkrecht translatorisch anzutreiben, wenn der Vorsprung (415) mit der senkrechten Vertiefung (710) zusammenwirkt und die Schnecke (411) drehbar angetrieben wird.

5. System (1) nach einem der Ansprüche 1 bis 4, wobei das Stellglied (400) ein waagerechtes Stellglied (420) umfasst, das mindestens eine waagerechte Translationsvorrichtung (421) umfasst, umfassend:
- ein Antriebselement (422), das dazu konfiguriert ist, mit einer waagerechten Vertiefung (720) zusammenzuwirken, die an dem Fach (300) ausgebildet ist, um das Fach (300) translatorisch anzutreiben;
- ein Antriebsstellglied (423), das dazu konfiguriert ist, das Antriebselement (422) drehbar anzutreiben;
- eine Kupplungsvorrichtung (424), die dazu konfiguriert ist, selektiv das Antriebselement (422) und das Fach (300) in Eingriff zu bringen oder das Antriebselement (422) aus dem Fach (300) zu lösen.

6. System (1) nach Anspruch 5, wobei das waagerechte Stellglied (420) mehrere waagerechte Translationsvorrichtungen (421), eine Getriebewelle (450) und einen Elektromotor (451), der dazu konfiguriert ist, die Getriebewelle (450) anzutreiben, umfasst, wobei die Getriebewelle (450) dazu konfiguriert ist, die waagerechten Translationsvorrichtungen (421) gleichzeitig anzutreiben.

7. System (1) nach einem der Ansprüche 5 oder 6, wobei die Kupplungsvorrichtung (424) umfasst:
- einen beweglichen Arm (425), der drehbar an einem Translationsvorrichtungsgestell (426) gelagert ist, das an dem Gestell (210) fest gelagert ist, wobei das Antriebselement (422) an einem Ende des mobilen Arms (425) drehbar gelagert ist, und
- ein Kupplungsstellglied (427), das dazu konfiguriert ist, den beweglichen Arm (425) drehbar anzutreiben, wobei das Antriebselement (422) und das Antriebsstellglied (423) ebenfalls an dem mobilen Arm (425) gelagert sind.

8. System (1) nach Anspruch 7, wobei die waagerechte Translationsvorrichtung (421) außerdem eine Eingangswelle (428), die in einem Translationsvorrichtungsgestell (426) drehbar gelagert ist, und eine Verteilungsanordnung (429), die von der Eingangswelle (428) angetrieben wird, umfasst, wobei die Verteilungsanordnung (429) dazu konfiguriert ist, sowohl das Kupplungsstellglied (427) als auch das Antriebsstellglied (423) drehbar anzutreiben.

9. System (1) nach Anspruch 8, wobei die Kupplungsvorrichtung (424) ein Kupplungsstellglied (427) umfasst, umfassend:
- eine Nocke (447), die drehbar an dem beweglichen Arm (425) gelagert ist;
- eine Reibungsanordnung (455), die dazu konfiguriert ist, ein begrenztes Drehmoment der Verteilungsanordnung (429) auf die Nocke (447) zu übertragen und somit den drehbaren Antrieb der Nocke (447) sicherzustellen;
- eine Kurvenrolle (449), die an dem Gestell (210), das dazu konfiguriert ist, mit der Nocke (447) zusammenzuwirken, drehbar gelagert ist.

10. Verfahren zum Bewegen eines Zielfachs (300) zwischen einem Anfangsmodul (801) und einem Endmodul (802) in einem modularen System (1) zum Bewegen von Lagerelementen nach einem der Ansprüche 1 bis 9, umfassend folgende Schritte:
- S10: Bestimmen eines Wegs zwischen dem Anfangsmodul (801) und dem Endmodul (802), wobei der Weg N Module (200) umfasst,
- S20: Bewegen der Fächer (300), die sich auf dem zuvor bestimmten Weg befinden, um den Weg freizugeben,
- S30: Bewegen des Zielfachs (300) in Richtung auf das Endmodul (802) über die Module (200) des Wegs, wobei der Schritt des Bewegens des Zielfachs jedes Mal ausgeführt wird, wenn das Modul des an das Zielfach angrenzenden Wegs freigegeben wird.

11. Computerprogrammprodukt, umfassend Codedaten, die dazu konfiguriert sind, wenn sie von einer Recheneinheit umgesetzt werden, ein Verfahren zum Bewegen eines Fachs (300) nach Anspruch 10 in einem modularen System (1) zum Bewegen von Lagerelementen nach einem der Ansprüche 1 bis 9 umzusetzen.

## Claims

1. Modular system (1) for moving storage elements comprising a plurality of adjacent modules (200) and at least one rack (300) capable of being moved in the modular structure from one module (200) to an adjacent module (200),
a module (200) comprising a rectangular parallelepiped frame (210) comprising bars (212, 213, 214, 215) assembled together, at least one of the modules (200) and racks (300) comprising at least one actuator (400) and the other of the modules (200) and racks (300) comprising complementary indentations (700), one of the actuators (400) and indentations (700) being fixed to the bars (212, 213, 214, 215) of the frame (210), the other of the actuators (400) and indentations (700) being fixed to the rack (300), the actuators (400) and indentations (700) being configured to cooperate so as to translate a rack (300) located at least partially in one module (200) towards an adjacent module (200), the system (1) further comprising a central controller (600), configured to control the actuators (400) and manage the movement of the rack (300) in the system (1), **characterized in that** an actuator (400) comprises a drive element (422) configured to engage with the indentations (700), and a clutch device (424) configured to retract the drive element (422) into a disengaged position in which the drive element (422) is spaced from the indentations (700) so that the drive element (422) does not interact with the indentations (700).

2. System (1) according to claim 1, in which the actuators (400) of a module (200) are able to drive the rack (300) in translation in 3 dimensions.

3. System (1) according to one of claims 1 or 2 in combination with claim 2, in which when retracted, the drive element (422) moves in a plane inclined to the faces of the module (200), the inclination being between 30° and 60°.

4. System (1) according to one of claims 1 to 3, in which the actuator (400) comprises a vertical actuator (420) comprising a worm (411) rotatably mounted on the frame (210), a nut (414) cooperating with the worm (411), the nut (414) comprising a projection (415) configured to cooperate with a vertical indentation (710) made along a vertical edge of the rack (300), so as to drive the rack (300) in vertical translation when the projection (415) cooperates with the vertical indentation (710) and the screw (411) is driven in rotation.

5. System (1) according to one of claims 1 to 4, in which the actuator (400) comprises a horizontal actuator (420) comprising at least one horizontal translator (421) comprising :
- a drive element (422) configured to cooperate with a horizontal indentation (720) made on the rack (300) so as to drive the rack (300) in translation;
- a drive actuator (423) configured to rotate the drive element (422);
- a clutch device (424) configured to selectively engage the drive element (422) and the rack (300) or disengage the drive element (422) from the rack (300).

6. System (1) as claimed in claim 5, wherein the horizontal actuator (420) comprises a plurality of horizontal translators (421), a drive shaft (450) and an electric motor (451) configured to drive the drive shaft (450), the drive shaft (450) being configured to drive the horizontal translators (421) simultaneously.

7. System (1) according to one of claims 5 or 6, wherein the clutch device (424) comprises:
- a movable arm (425) rotatably mounted on a translator frame (426) fixedly mounted on the frame (210), the drive element (422) being rotatably mounted at one end of the movable arm (425), and
- a clutch actuator (427) configured to drive the movable arm (425) in rotation, the drive element (422) and the drive actuator (423) also being mounted on the movable arm (425).

8. System (1) according to claim 7, wherein the horizontal translator (421) further comprises an input shaft (428) rotatably mounted in a translator frame (426), and a distribution assembly (429) driven by the input shaft (428), the distribution assembly (429) being configured to rotate both the clutch actuator (427) and the drive actuator (423).

9. System (1) according to claim 8, wherein the clutch device (424) comprises a clutch actuator (427) including:
- a cam (447) rotatably mounted on the movable arm (425);
- a friction assembly (455) configured to transmit a limited torque from the distribution assembly (429) to the cam (447) and thus ensure rotation of the cam (447);
- a cam roller (449) rotatably mounted on the frame (210) and configured to cooperate with the cam (447).

10. Method of moving a target rack (300) between an initial module (801) and a final module (802) in a modular storage element moving system (1) according to one of claims 1 to 9, comprising the steps of:
- S10: Determining a path between the initial module (801) and the final module (802), the path comprising N modules (200),
- S20: Relocate the racks (300) located on the previously determined path so as to free up the path,
- S30: Moving the target rack (300) to the final module (802) via the modules (200) in the path, the step of moving the target rack being carried out each time the module in the path adjacent to the target rack is released.

11. Computer program product comprising code data configured to, when implemented by a computing unit, implement a method of moving a rack (300) according to claim 10 in a modular storage element moving system (1) according to one of claims 1 to 9.
